# EUROPEAN PATENT SPECIFICATION

(11) **EP 4 442 975 B1**
(45) Date of publication and mention of the grant of the patent: **06.05.2026**
(21) Application number: 24161337.1
(22) Date of filing: 05.03.2024
(51) Int. Cl.: F01P 11/20, F02N 19/10

(54) **COOLANT HEATER PROTECTION SYSTEMS AND METHODS**
SCHUTZSYSTEME UND -VERFAHREN FÜR KÜHLMITTELERHITZER
SYSTÈMES ET PROCÉDÉS DE PROTECTION DE DISPOSITIF DE CHAUFFAGE DE FLUIDE DE REFROIDISSEMENT

(30) Priority: 06.03.2023 US 202318178938
(43) Date of publication of application: 09.10.2024
(73) Proprietor: Phillips & Temro Industries Inc., Eden Prairie, Minnesota 55344 (US)
(72) Inventor: DOUGLAS, Jeremy N., Chanhassen, 55317 (US); TONKIN, Steven W., Eden Prairie, 55346 (US)
(74) Representative: Michalski Hüttermann & Partner Patentanwälte mbB

(56) References cited:
- CN-A- 111 900 505
- CN-A- 115 013 114
- US-A- 4 770 134
- US-A1- 2004 244 752
- US-A1- 2007 137 599

## Description

### FIELD

The present disclosure relates to coolant heaters, such as for internal combustion engines and other applications, and more particularly to systems and methods for protecting such coolant heaters.

### BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Various different types of internal combustion engines are available. For example, some engines combust gasoline. Other engines combust diesel fuel. Yet other engines combust natural gas or propane. Other engines combust other types of fuel and/or gas.

When an engine is on and running, an engine coolant can be used to cool the engine. For example, a coolant pump can be used to pump coolant through the engine and a heat exchanger while the engine is running. The coolant absorbs heat from the engine while the coolant is within the engine. Heat is transferred from the coolant to air and diesel fuel when the coolant is within the heat exchanger. US 4 770 134 A1 discloses an engine preheater comprising a tubular tank adapted to be mounted generally horizontally and having an inlet adjacent one end of the tank for flow of engine coolant into the tank and an outlet adjacent the opposite end of the tank for flow of heated engine coolant out of the tank. The preheater includes an electric heating element in the tank spaced from the inlet of the tank for heating engine coolant in the tank and a temperature sensor inside the tank adjacent the inlet of the tank. The sensor is so positioned relative to the inlet and the heating element that it is adapted accurately to sense the temperature of engine coolant flowing into the tank via the inlet before the incoming engine coolant is substantially heated by the heating element.

### SUMMARY

According to the invention, a coolant heating system in accordance with claim 1 is provided.

In further features, the temperature sensor is a thermistor.

In further features, the housing is configured to be located vertically below a vertically lowest point of a coolant loop of the engine, and no pump is used to pump coolant between the coolant heater and the engine.

In further features, a pump is configured to pump coolant between the coolant heater and the engine.

In further features, the temperature sensor extends through the housing and is configured to directly contact coolant within the housing.

In further features, the temperature sensor does not directly contact coolant within the housing.

According to the invention, a second temperature sensor is configured to measure a second temperature of coolant within the housing, where the heater control module is configured to receive the second temperature from the second temperature sensor.

According to the invention, the temperature sensor is configured to measure the temperature of coolant within the inlet; and the second temperature sensor is configured to measure the second temperature of coolant within the outlet.

In further features: the condition is at least a portion of the heating element not being submerged in coolant; and the heater control module is configured to selectively detect the presence of the condition based on the temperature.

In further features, the heater control module is configured to detect the presence of the condition when the temperature is greater than a second predetermined temperature that is greater than the predetermined temperature.

In further features, the heater control module is configured to detect the presence of the condition based on a rate of increase of the temperature.

In further features, the heater control module is configured to detect the presence of the condition when the rate of increase of the temperature is greater than a predetermined rate of temperature increase.

In further features: the condition is low coolant flow; and the heater control module is configured to selectively detect the presence of the condition based on the temperature.

According to the invention, the second temperature sensor configured to measure a second temperature of coolant within the housing, where the heater control module is configured to detect the presence of the condition further based on the second temperature.

In further features, the heater control module is configured to detect the presence of the condition based on a difference between the temperature and the second temperature.

In further features, the heater control module is configured to detect the presence of the condition when the difference is greater than a predetermined temperature difference.

In further features, a pump is configured to pump coolant between the coolant heater and the engine, where the condition is a fault of the pump; and the heater control module is configured to selectively detect the presence of the condition based on the temperature.

In further features, the heater control module is configured to detect the presence of the condition when a difference between the temperature and the second temperature is greater than a predetermined temperature difference.

In a feature, a method includes: receiving a temperature from a temperature sensor, the temperature sensor configured to measure a temperature of coolant within a housing of a coolant heater, the coolant heater including: the housing including: an inlet configured to receive coolant from an engine; and an outlet configured to output coolant to the engine; an electrically resistive heating element that is disposed within the housing and that is configured to generate heat when power is applied to the heating element; selectively when the engine is off, controlling application of power to the heating element based on maintaining the temperature at or above a predetermined temperature; selectively detecting the presence of a condition based on the temperature; and when the presence of the condition is detected, disconnecting the heating element from power.

Further areas of applicability of the present disclosure will become apparent from the detailed description, the claims and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIGS. 1A-1B are functional block diagrams of an example coolant heater system;
FIGS. 2-3 are cross-sectional views of example implementations of a coolant heater;
FIG. 4 is a functional block diagram of an example implementation of the heater control module; and
FIG. 5 is a flowchart depicting an example method of controlling powering of the coolant heater.

In the drawings, reference numbers may be reused to identify similar and/or identical elements.

### DETAILED DESCRIPTION

Various different types of internal combustion engines are available. For example, some engines combust gasoline. Other engines combust diesel fuel. Yet other engines combust natural gas or propane. Other engines combust other types of fuel and/or gas.

Engines can be used to drive various different loads. For example, some engines may drive generators that convert power output by the engine into electrical power for one or more electrical loads. As another example, some engines drive pumps, such as water pumps. The pumps pump fluid to one or more places. For example, water pumps may pump water to sprinkler systems.

Some types of engines may struggle to combust fuel at low temperatures. For example, diesel engines may struggle to combust fuel at low temperatures as diesel fuel may incompletely vaporize at low temperatures.

A coolant heater may be used to heat coolant supplied to such an engine while the engine is off, for example, to help prepare the engine for combustion upon startup of the engine. The coolant heater may heat the coolant using an electrical (e.g., resistive) heater. The electrical heater may be damaged, however, when the electrical heater is not completely submerged in coolant.

While the example of engines is provided, the present application is also applicable to coolant heaters for other applications, such as coolant heaters of electric vehicles that are used to warm one or more batteries and/or coolant heaters that are used to warm passenger cabins of vehicles.

The present application involves protection systems and methods for the electrical heater. One or more temperature sensors, such as thermistors, are used to measure temperature of coolant within the coolant heater. A control module determines whether or not the electrical heater is completely submerged based on the temperature(s). Detecting whether or not the electrical heater is completely submerged and/or the presence of one or more other conditions based on the measurements from the temperature sensors enables power to the electrical heater to be discontinued more quickly, such as to prevent damage to the electrical heater.

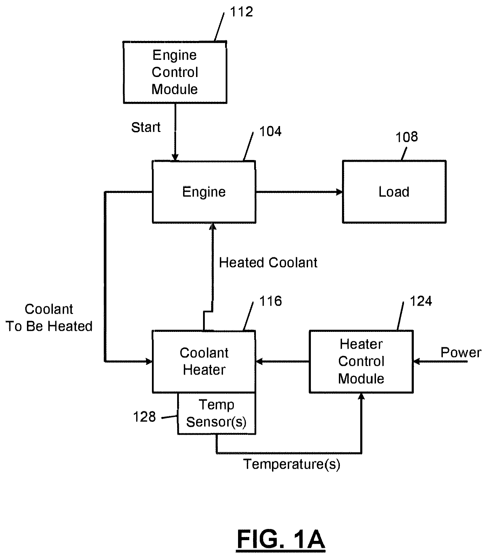

FIGS. 1A-1B are functional block diagrams of example coolant heater systems. An engine 104 combusts a mixture of air and fuel to generate torque. The fuel may be, for example, diesel fuel. The engine 104 outputs torque to a load 108, such as a pump that pumps a fluid, a generator that converts rotational energy into electrical energy, or another suitable type of load.

An engine control module 112 controls whether the engine 104 is on or off. The engine control module 112 may start the engine 104 and leave the engine 104 on when a predetermined condition is present. For example, in the case of the load 108 including a generator, the engine control module 112 may start and run the engine 104 when incoming electrical power (e.g., from an alternating current source) is lost or less than a predetermined value or one or more other predetermined conditions is/are detected. In the example of the load 108 including a pump (e.g., a water pump for a fire suppression system), the engine control module 112 may turn on and run the engine 104 when smoke, fire, or one or more other predetermined conditions is/are detected. The engine control module 112 may turn and maintain the engine 104 off when the predetermined condition(s) are not present.

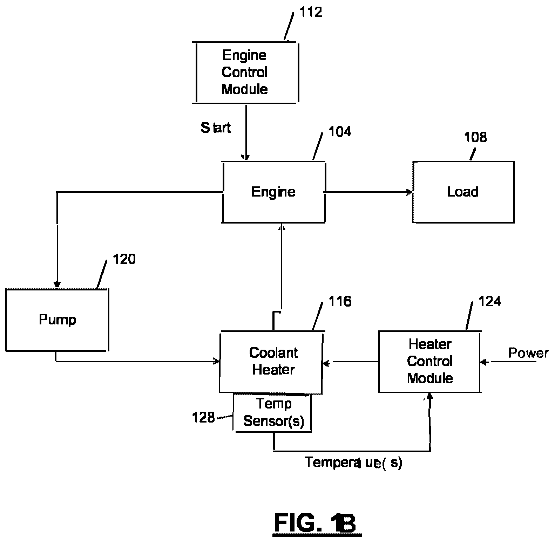

While the engine 104 is off, a coolant heater 116 may be used to heat coolant and to provide heated coolant to the engine 104. The heated coolant may help the engine 104 be able to combust fuel efficiently and with minimized emissions if the engine 104 is started and the temperature is low (e.g., less than a predetermined temperature). Heated coolant flows from the coolant heater 116 to the engine 104. While within the engine, heat flows from the coolant to the engine 104. Cooler coolant exits the engine 104 and returns to the coolant heater 116 to be heated again. In various implementations, such as shown in the example of FIG. 1B, a pump 120 may be used to pump the coolant and circulate coolant between the coolant heater 116 and the engine 104. In the example of FIG. 1A that does not include the pump 120, the coolant heater 116 may be disposed vertically below the engine 104 as to create a thermosyphon where warmer coolant rises vertically to the engine 104 and cooler coolant from the engine falls vertically to the coolant heater 116.

The coolant heater 116 includes an electrically resistive heating element that generates heat when electrical power is applied to the heating element. While the example of one heating element is provided, the coolant heater 116 may include two or more electrically resistive heating elements.

A heater control module 124 controls the application of power to the heating element of the coolant heater 116 and therefore whether heating of the coolant is occurring. When the engine 104 is off, the heater control module 124 may apply power to the heating element based on maintaining one or more measured temperatures of the coolant within the coolant heater 116 above a predetermined temperature, such as approximately 120-145 degrees Fahrenheit or another suitable temperature. The temperature(s) is/are measured using one or more temperature sensors 128 that extend into the coolant heater 116 to directly contact coolant within the coolant heater 116. The temperature sensor(s) 128 may be, for example, thermistors. While the example of the temperature sensors 128 directly contacting the coolant, the present application is also applicable to the temperature sensors 128 not directly contacting the coolant.

As an alternative to bi-metallic disc thermostats that are mounted to the exterior surface of the coolant heater 116, locating the temperature sensor(s) 128 extending into the coolant heater 116 allows for faster sensing and response to an overheat run dry condition of the heating element where a portion of or all of the heating element is in direct contact with air and not coolant.

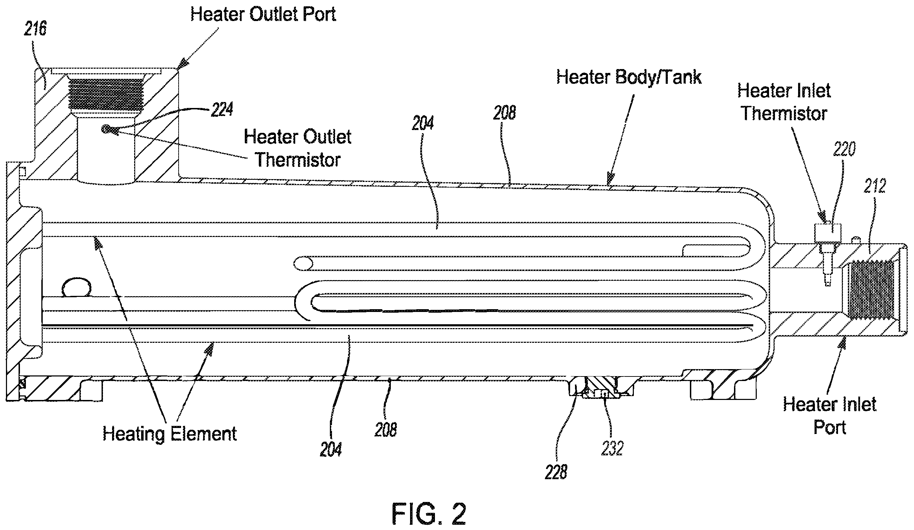

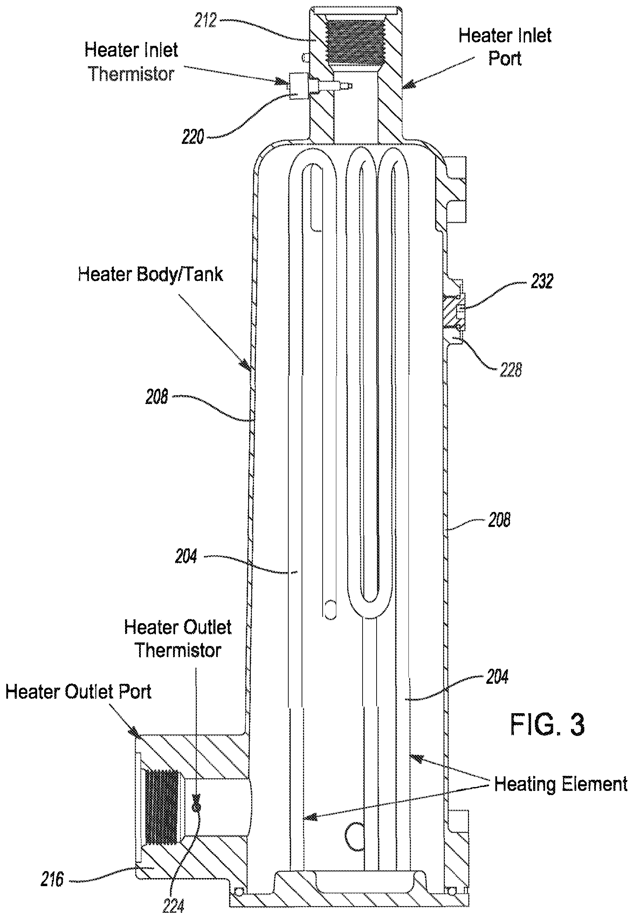

FIGS. 2-3 are cross-sectional views of example implementations of the coolant heater 116. The coolant heater 116 includes one or more heating elements, such as heating element 204. The heating element 204 is electrically resistive and generates heat when electrical power is applied to the heating element 204.

The heating element 204 is disposed within an exterior housing 208. The housing may be made of, for example, a metal (e.g., aluminum), a plastic, or another suitable material. The coolant heater 116 includes an inlet 212 through which coolant flows into the coolant heater 116 from the engine 104 and a coolant outlet 216 through which coolant flows out of the coolant heater 116 and to the engine 104. In various implementations, the inlet 212 and the outlet 216 may include threads on inner or outer surfaces thereof and conduits fluidly connecting the coolant heater 116 and the engine 104 may be engaged to the inlet 212 and the outlet 216 via threads.

An inlet temperature sensor 220, such as a first thermistor, measures a temperature of the coolant within the inlet 212 (inlet temperature) of the coolant heater. The inlet temperature sensor 220 extends into the inlet 212 to directly contact coolant within the inlet 212. An outlet temperature sensor 224, such as a second thermistor, may measure a temperature of the coolant within the outlet 216 of the coolant heater 116 (outlet temperature). The outlet temperature sensor 224 extends into the outlet 216 to directly contact coolant within the outlet 216.

The coolant heater 116 may include a coolant drain port 228, such as on a vertically lower surface of the housing 208. A plug 232 may plug the coolant drain port 228 and may be removable from the coolant drain port 228, such as to allow coolant to be drained.

As illustrated in FIG. 2, the outlet 216 may be formed on a vertically upper side of the housing 208, for example, for the thermosyphon example of FIG. 1A where the pump 120 is omitted. In this example, the inlet 212 is disposed on the housing 208 vertically below the outlet 216. The outlet 216 may be formed on another side of the housing 208 in the example of FIG. 1B where the pump 120 is included. For example, the outlet 216 may be formed on a side of the housing 208 and the inlet 212 is disposed (e.g., located) on the housing 208 vertically above the outlet 216.

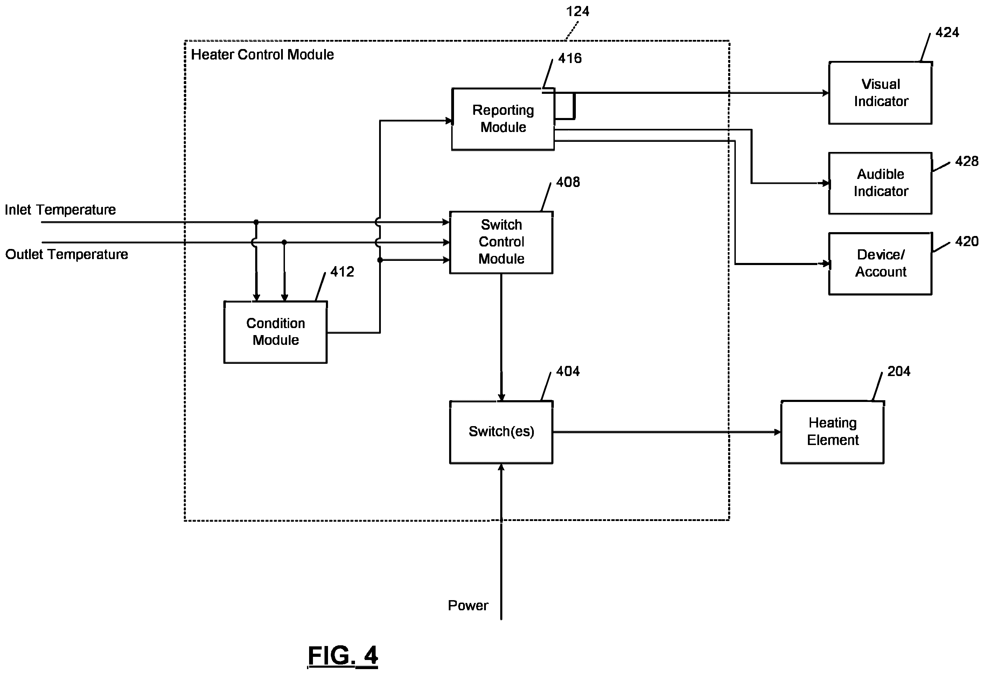

FIG. 4 is a functional block diagram of an example implementation of the heater control module 124. One or more switches 404 that connect and disconnect power to and from the heating element 204. The power may be alternating current (AC) power or direct current (DC) power. In various implementations, AC power may be received, such as from a wall outlet via a power cord. The heater control module 124 may include an AC to DC converter that converts the received AC power into DC and outputs the DC power to the switch(es) 404. The switch(es) 404 connect the heating element 204 to power when closed. The switch(es) 404 disconnect the heating element 204 from power when open.

A switch control module 408 controls actuation (opening and closing) of the switch(es) 404. Generally, while the engine 104 is off, the switch control module 408 controls opening and closing of the switch(es) 404 based on maintaining one or more temperatures of the coolant at or above a predetermined temperature. The predetermined temperature may be, for example, approximately 120 degrees Fahrenheit or another suitable temperature. The switch control module 408 may, for example, close the switch(es) 404 when the engine is off and the temperature is less than the predetermined temperature and maintain the switch(es) 404 closed until the temperature becomes greater than the predetermined temperature (or a second predetermined temperature that is greater than the predetermined temperature). The switch control module 408 may open the switch(es) 404 when the temperature is greater than the predetermined temperature (or the second predetermined temperature) and maintain the switch(es) 404 open until the temperature falls below the predetermined temperature.

According to the invention, the switch control module 408 determines the temperature based on the inlet temperature and the outlet temperature. For example, the switch control module 408 may set the temperature based on an average of the inlet and outlet temperatures.

A condition module 412 detects the presence of one or more conditions based on the temperature, the inlet temperature and the outlet temperature. The switch control module 408 may take one or more actions when a condition is detected.

For example, the condition module 412 may detect the presence of air within the coolant heater 116 (and contacting one or more portions of the heating element 204) when an increase in the temperature over a predetermined period is greater than a predetermined rate of temperature increase. The predetermined rate of increase may be calibrated and may be set, for example, based on a wattage of the heating element 204, a coolant flow rate, the predetermined temperature of the coolant, and/or one or more other parameters. The predetermined rate of increase may be, for example, approximately 6-10 degrees Fahrenheit per second or another suitable temperature increase rate if a coolant pump 120 is included. The predetermined rate of increase may be higher if no coolant pump 120 is included. For example, the predetermined rate of increase may be approximately 10-14 degrees Fahrenheit per second or another suitable temperature increase. Detecting the presence of air within the coolant heater 116 based on the temperature(s) measured by the temperature sensors 128 is faster than detecting the presence of that condition based on one or more temperatures on the housing 208. This decreases thermal stress on the heating element 204. The temperature sensor(s) 128 are able to detect this condition because they may partially or completely be in air.

Additionally or alternatively, the condition module 412 may detect the presence of air within the coolant heater 116 (and contacting one or more portions of the heating element 204) when the temperature is greater than a second predetermined temperature that is greater than predetermined temperature at which the switch control module 408 attempts to generally maintain the coolant temperature while the engine 104 is off. The second predetermined temperature may be, for example, approximately 130-140 degrees Fahrenheit or another suitable temperature.

Additionally or alternatively, the condition module 412 may detect a fault in the pump 120 (e.g., low or no flow) based on a difference (delta) between the inlet temperature and the outlet temperature. The condition module 412 may set the difference, for example, based on or to the inlet temperature minus the outlet temperature. In various implementations, a magnitude may be used. For example, the condition module 412 may detect the fault in the pump 120 when the difference is greater than a predetermined difference. The predetermined difference may be calibrated as described above. For example only, the predetermined difference may be, for example, approximately 10 degrees F or another suitable temperature difference.

Additionally or alternatively, in the example of the pump 120 not being included, the condition module 412 may detect a flow fault (e.g., plugging or low flow) based on the difference. For example, the condition module 412 may detect the flow fault when the difference is greater than a second predetermined difference. The second predetermined difference may be calibrated as described above. For example only, the second predetermined difference may be, for example, approximately 8 degrees F or another suitable temperature difference. If thermostats were used instead of the above, a thermostat would experience rapid cycling if a flow fault or a fault in the pump 120 occurred. Results of excessive cycling include inaccurate temperature control of the coolant, premature thermostat contact wear and/or failure, and thermal stress to the heating element 204 and other heater components.

The switch control module 408 may open the switch(es) 404 and maintain the switch(es) 404 open when one or more of the conditions above are detected. In various implementations, after opening the switch(es) 404, the switch control module 408 may close the switch(es) to restart the coolant heater 116 to determine whether the condition is still present. This may prevent nuisance errors.

One or more other actions may additionally be taken when one or more of the conditions above are detected. For example, a reporting module 416 may output an indicator of the one or more of the conditions detected. The reporting module 416 may, for example, transmit the indicator to a computing device or account (e.g., email, phone number) 420 associated with an owner, manager, or operator. Additionally or alternatively, the reporting module 416 may turn on a visual indicator (e.g., a light) 424 and/or audible indicator (e.g., a speaker) 428 when one or more of the conditions above are detected. The reporting module 416 may, for example, turn the visual indicator 424 and/or the audible indicator 428 on and off according to one or more predetermined patterns indicative of the presence of the one or more of the conditions, respectively, above are detected. This may aid a service technician in more easily diagnosing the condition(s) detected.

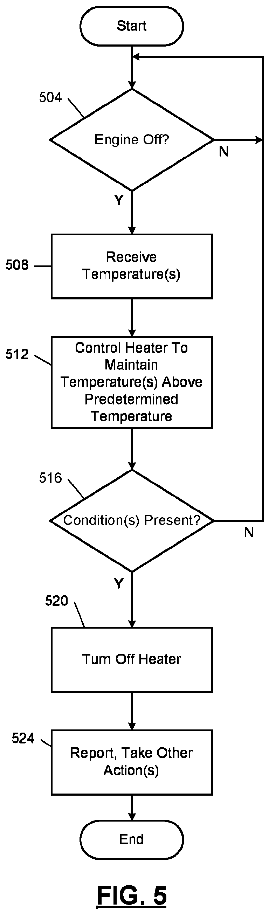

FIG. 5 is a flowchart depicting an example method of controlling powering of the coolant heater 116. Control begins with 504 where the switch control module 408 may determine whether the engine 104 is off. For example, the engine control module 112 may transmit a signal to the heater control module 124 indicating whether the engine 104 is on or off. If 504 is true, control continues with 508. If 504 is false, control may remain at 504. The switch control module 408 may leave the coolant heater 116 off and not apply power to the heating element 204 when the engine 104 is on.

At 508, the switch control module 408 and the condition module 412 receives at least one of the inlet and outlet temperatures. The condition module 412 may determine the temperature based on the inlet and outlet temperatures. The condition module 412 may determine the temperature difference as described above.

At 512, the switch control module 408 may apply power to the heating element 204 based on maintaining the temperature of the coolant in the engine at or above the predetermined temperature (e.g., approximately 120 degrees F). At 516, the condition module 412 determines whether one or more of the conditions above are present. If 516 is false, control may return to 504 and continue controlling the application of power to the heating element 204 based on maintaining the temperature of the coolant in the engine 104 at or above the predetermined temperature (e.g., approximately 120 degrees F). If 516 is true, control continues with 520.

At 520, the switch control module 408 opens the switch(es) 404 and disconnects the heating element 204 from power. This is to prevent damaging the heating element 204 and/or one or more other components. The heater control module 124 may also turn off the pump 120 if included at 520. At 524, the reporting module 416 may output the indicator of the one or more conditions detected. One or more other actions may also be taken at 524. For example, after maintaining the heating element 204 disconnected for a predetermined period, the switch control module 408 may close the switch(es) 404 and re-connect the heating element 204 to power. The switch control module 408 may also turn on the pump 120 if included. The condition module 412 may then determine whether the one or more detected conditions remain. If so, the switch control module 408 may open the switch(es) 404 and maintain the switch(es) 404 open until maintenance is performed to remedy the detected condition(s). Control may return to 504 after 524, or wait for an intervention, such as a power reset.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, Javascript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB,

## Claims

1. A coolant heating system for an engine, comprising: a
coolant heater (116) including:
a housing (208) including:
an inlet (212) configured to receive coolant from the engine; and
an outlet (216) configured to output coolant to the engine (104);
an electrically resistive heating element (204) that is disposed within the housing (208) and that is configured to generate heat when power is applied to the heating element (204); and
a temperature sensor (128, 220, 224) configured to measure a temperature of coolant within the housing (208); and
a heater control module (124) configured to:
receive the temperature from the temperature sensor (128, 220, 224);
selectively control application of power to the heating element (204) based on maintaining the temperature at or above a predetermined temperature;
selectively detect the presence of a condition based on the temperature; and
when the presence of the condition is detected, disconnect the heating element (204) from power, the coolant heating system being **characterized in that** it further comprises a second temperature sensor (128, 220, 224) configured to measure a second temperature of coolant within the housing (208),
wherein the heater control module (124) is configured to receive the second temperature from the second temperature sensor (128, 220, 224),
the temperature sensor (128, 220) is configured to measure the temperature of coolant within the inlet; and
the second temperature sensor (128, 224) is configured to measure the second temperature of coolant within the outlet, wherein the heater control module is configured to detect the presence of the condition further based on the second temperature.

2. The coolant heating system of claim 1 wherein the housing (208) is configured to be located vertically below a vertically lowest point of a coolant loop of the engine (104), and no pump is used to pump coolant between the coolant heater (116) and the engine (104).

3. The coolant heating system of claim 1 wherein the temperature sensor (128, 220, 224) extends through the housing (208) and is configured to directly contact coolant within the housing (208).

4. The coolant heating system of claim 1 wherein the temperature sensor (128, 220, 224) does not directly contact coolant within the housing (208).

5. The coolant heating system of claim 1 wherein:
the condition is at least a portion of the heating element (204) not being submerged in coolant; and the heater control module (124) is configured to selectively detect the presence of the condition based on the temperature.

6. The coolant heating system of claim 5 wherein the heater control module (124) is configured to detect the presence of the condition when the temperature is greater than a second predetermined temperature that is greater than the predetermined temperature.

7. The coolant heating system of claim 5 wherein the heater control module (124) is configured to detect the presence of the condition based on a rate of increase of the temperature.

8. The coolant heating system of claim 1 wherein: the
condition is low coolant flow; and
the heater control module (124) is configured to selectively detect the presence of the condition based on the temperature.

9. The coolant heating system of claim 1 wherein the heater control module (124) is configured to detect the presence of the condition based on a difference between the temperature and the second temperature.

10. The coolant heating system of claim 1 further comprising a pump (120) configured to pump coolant between the coolant heater (116) and the engine (104),
wherein the condition is a fault of the pump (120); and
the heater control module (124) is configured to selectively detect the presence of the condition based on the temperature.

11. The coolant heating system of claim 10,
wherein the heater control module (1 2 4 ) is configured to detect the presence of the condition further based on the second temperature.

12. A method, comprising:
receiving a temperature from a temperature sensor (128, 220, 224), the temperature sensor (128, 220, 224) configured to measure a temperature of coolant within a housing (208) of a coolant heater (116),
the coolant heater (116)
including: the housing
including:
an inlet (212) configured to receive coolant from an engine (104);
and an outlet (216) configured to output coolant to the engine (104);
an electrically resistive heating element (204) that is disposed within the housing (208) and that is configured to generate heat when power is applied to the heating element (204);
selectively controlling application of power to the heating element ( 2 0 4 ) based on maintaining the temperature at or above a predetermined temperature;
selectively detecting the presence of a condition based on the temperature; and when
the presence of the condition is detected, disconnecting the heating element (204) from power,
the method being **characterized by** further comprising receiving a temperature from a second temperature sensor (128, 220, 224) configured to measure a second temperature of coolant within the housing (208),
wherein the heater control module (124) is configured to receive the second temperature from the second temperature sensor (128, 220, 224),
the temperature sensor (128, 220) is configured to measure the temperature of coolant within the inlet (212); and
the second temperature sensor (128, 224) is configured to measure the second temperature of coolant within the outlet (216), wherein the step of selectively detecting the presence of a condition is further based on the second temperature.

## Patentansprüche

1. Kühlmittelerhitzungssystem für einen Motor, aufweisend:
einen Kühlmittelerhitzer (116), der aufweist:
ein Gehäuse (208), das aufweist:
einen Einlass (212), der dazu eingerichtet ist, Kühlmittel von dem Motor zu empfangen; und
einen Auslass (216), der dazu eingerichtet ist, Kühlmittel an den Motor (104) auszugeben;
ein elektrisches Widerstandsheizelement (204), das innerhalb des Gehäuses (208) angeordnet ist und dazu eingerichtet ist, Wärme zu erzeugen, wenn dem Heizelement (204) elektrische Leistung zugeführt wird; und
einen Temperatursensor (128, 220, 224), der dazu eingerichtet ist, eine Temperatur von Kühlmittel innerhalb des Gehäuses (208) zu messen; und
ein Erhitzer-Steuermodul (124), das dazu eingerichtet ist:
die Temperatur von dem Temperatursensor (128, 220, 224) zu empfangen;
auf der Grundlage eines Aufrechterhaltens der Temperatur bei oder über einer vorbestimmten Temperatur eine Zuführung von elektrischer Leistung zu dem Heizelement (204) selektiv zu steuern;
das Vorhandensein eines Zustands basierend auf der Temperatur selektiv zu erkennen; und,
wenn das Vorhandensein des Zustands erkannt wird, das Heizelement (204) von elektrischer Leistung zu trennen, wobei das Kühlmittelerhitzungssystem **dadurch gekennzeichnet ist, dass** es ferner einen zweiten Temperatursensor (128, 220, 224) aufweist, der dazu eingerichtet ist, eine zweite Temperatur von Kühlmittel innerhalb des Gehäuses (208) zu messen,
wobei das Erhitzer-Steuermodul (124) dazu eingerichtet ist, die zweite Temperatur von dem zweiten Temperatursensor (128, 220, 224) zu empfangen,
der Temperatursensor (128, 220) dazu eingerichtet ist, die Temperatur von Kühlmittel innerhalb des Einlasses zu messen; und
der zweite Temperatursensor (128, 224) dazu eingerichtet ist, die zweite Temperatur von Kühlmittel innerhalb des Auslasses zu messen, wobei das Erhitzer-Steuermodul dazu eingerichtet ist, das Vorhandensein des Zustands ferner basierend auf der zweiten Temperatur zu erkennen.

2. Kühlmittelerhitzungssystem nach Anspruch 1, wobei das Gehäuse (208) dazu eingerichtet ist, vertikal unterhalb eines vertikal tiefsten Punktes einer Kühlmittelschleife des Motors (104) positioniert zu sein, und keine Pumpe verwendet wird, um Kühlmittel zwischen dem Kühlmittelerhitzer (116) und dem Motor (104) zu pumpen.

3. Kühlmittelerhitzungssystem nach Anspruch 1, wobei der Temperatursensor (128, 220, 224) sich durch das Gehäuse (208) erstreckt und dazu eingerichtet ist, in direktem Kontakt zu Kühlmittel innerhalb des Gehäuses (208) zu sein.

4. Kühlmittelerhitzungssystem nach Anspruch 1, wobei der Temperatursensor (128, 220, 224) nicht direkt mit Kühlmittel innerhalb des Gehäuses (208) in Kontakt ist.

5. Kühlmittelerhitzungssystem nach Anspruch 1, wobei:
der Zustand darin besteht, dass mindestens ein Abschnitt des Heizelements (204) nicht in Kühlmittel eingetaucht ist; und
das Erhitzer-Steuermodul (124) dazu eingerichtet ist, das Vorhandensein des Zustands basierend auf der Temperatur selektiv zu erkennen.

6. Kühlmittelerhitzungssystem nach Anspruch 5, wobei das Erhitzer-Steuermodul (124) dazu eingerichtet ist, das Vorhandensein des Zustands zu erkennen, wenn die Temperatur größer als eine zweite vorbestimmte Temperatur ist, die größer als die vorbestimmte Temperatur ist.

7. Kühlmittelerhitzungssystem nach Anspruch 5, wobei das Erhitzer-Steuermodul (124) dazu eingerichtet ist, das Vorhandensein des Zustands basierend auf einer Anstiegsrate der Temperatur zu erkennen.

8. Kühlmittelerhitzungssystem nach Anspruch 1, wobei:
der Zustand ein geringer Kühlmittelfluss ist; und
das Erhitzer-Steuermodul (124) dazu eingerichtet ist, das Vorhandensein des Zustands basierend auf der Temperatur selektiv zu erkennen.

9. Kühlmittelerhitzungssystem nach Anspruch 1, wobei das Erhitzer-Steuermodul (124) dazu eingerichtet ist, das Vorhandensein des Zustands basierend auf einem Unterschied zwischen der Temperatur und der zweiten Temperatur zu erkennen.

10. Kühlmittelerhitzungssystem nach Anspruch 1, ferner aufweisend eine Pumpe (120), die dazu eingerichtet ist, Kühlmittel zwischen dem Kühlmittelerhitzer (116) und dem Motor (104) zu pumpen,
wobei der Zustand ein Fehler der Pumpe (120) ist; und
das Erhitzer-Steuermodul (124) dazu eingerichtet ist, das Vorhandensein des Zustands basierend auf der Temperatur selektiv zu erkennen.

11. Kühlmittelerhitzungssystem nach Anspruch 10,
wobei das Erhitzer-Steuermodul (124) dazu eingerichtet ist, das Vorhandensein des Zustands ferner basierend auf der zweiten Temperatur zu erkennen.

12. Verfahren, umfassend:
Empfangen einer Temperatur von einem Temperatursensor (128, 220, 224), wobei der Temperatursensor (128, 220, 224) dazu eingerichtet ist, eine Temperatur von Kühlmittel innerhalb eines Gehäuses (208) eines Kühlmittelerhitzers (116) zu messen,
wobei der Kühlmittelerhitzer (116) aufweist:
das Gehäuse, das aufweist:
einen Einlass (212), der dazu eingerichtet ist, Kühlmittel von einem Motor (104) zu empfangen;
und einen Auslass (216), der dazu eingerichtet ist, Kühlmittel an den Motor (104) auszugeben;
ein elektrisches Widerstandsheizelement (204), das innerhalb des Gehäuses (208) angeordnet ist und dazu eingerichtet ist, Wärme zu erzeugen, wenn dem Heizelement (204) elektrische Leistung zugeführt wird;
selektives Steuern einer Zuführung von elektrischer Leistung zu dem Heizelement (204) auf der Grundlage eines Aufrechterhaltens der Temperatur bei oder über einer vorbestimmten Temperatur;
selektives Erkennen des Vorhandenseins eines Zustands basierend auf der Temperatur; und
Trennen des Heizelements (204) von elektrischer Leistung, wenn das Vorhandensein des Zustands erkannt wird,
wobei das Verfahren **dadurch gekennzeichnet ist, dass** es ferner Empfangen einer Temperatur von einem zweiten Temperatursensor (128, 220, 224) umfasst, der dazu eingerichtet ist, eine zweite Temperatur von Kühlmittel innerhalb des Gehäuses (208) zu messen,
wobei das Erhitzer-Steuermodul (124) dazu eingerichtet ist, die zweite Temperatur von dem zweiten Temperatursensor (128, 220, 224) zu empfangen,
der Temperatursensor (128, 220) dazu eingerichtet ist, die Temperatur von Kühlmittel innerhalb des Einlasses (212) zu messen; und
der zweite Temperatursensor (128, 224) dazu eingerichtet ist, die zweite Temperatur von Kühlmittel innerhalb des Auslasses (216) zu messen, wobei der Schritt des selektiven Erkennens des Vorhandenseins eines Zustands ferner auf der zweiten Temperatur basiert.

## Revendications

1. Système de chauffage de liquide de refroidissement pour un moteur, comprenant: un
réchauffeur de liquide de refroidissement (116) comprenant:
un boîtier (208) comprenant:
une entrée (212) configurée pour recevoir le liquide de refroidissement provenant du moteur; et
une sortie (216) configurée pour fournir du liquide de refroidissement au moteur (104);
un élément chauffant à résistance électrique (204) qui est disposé à l'intérieur du boîtier (208) et qui est configuré pour générer de la chaleur lorsqu'une puissance est appliquée à l'élément chauffant (204); et
un capteur de température (128, 220, 224) configuré pour mesurer une température du liquide de refroidissement à l'intérieur du boîtier (208); et
un module de commande de chauffage (124) configuré pour:
recevoir la température provenant du capteur de température (128, 220, 224);
contrôler de manière sélective l'application de puissance à l'élément chauffant (204) en fonction du maintien de la température à une température prédéterminée ou supérieure;
détecter de manière sélective la présence d'une condition en fonction de la température; et
lorsque la présence de la condition est détectée, déconnecter l'élément chauffant (204) de l'alimentation électrique, le système de chauffage du liquide de refroidissement étant **caractérisé en ce qu'**il comprend en outre un deuxième capteur de température (128, 220, 224) configuré pour mesurer une deuxième température du liquide de refroidissement à l'intérieur du boîtier (208),
dans lequel le module de commande du chauffage (124) est configuré pour recevoir la deuxième température provenant du deuxième capteur de température (128, 220, 224),
le capteur de température (128, 220) est configuré pour mesurer la température du liquide de refroidissement au niveau de l'entrée; et
le deuxième capteur de température (128, 224) est configuré pour mesurer la deuxième température du liquide de refroidissement au niveau de la sortie, dans lequel le module de commande du chauffage est configuré pour détecter la présence de la condition en se basant en outre sur la deuxième température.

2. Système de chauffage du liquide de refroidissement selon la revendication 1, dans lequel le boîtier (208) est configuré pour être situé verticalement sous le point le plus bas verticalement d'une boucle de liquide de refroidissement du moteur (104), et aucune pompe n'est utilisée pour pomper le liquide de refroidissement entre le réchauffeur de liquide de refroidissement (116) et le moteur (104).

3. Système de chauffage du liquide de refroidissement selon la revendication 1, dans lequel le capteur de température (128, 220, 224) s'étend à travers le boîtier (208) et est configuré pour entrer directement en contact avec le liquide de refroidissement à l'intérieur du boîtier (208).

4. Système de chauffage du liquide de refroidissement selon la revendication 1, dans lequel le capteur de température (128, 220, 224) n'est pas en contact direct avec le liquide de refroidissement à l'intérieur du boîtier (208).

5. Système de chauffage du liquide de refroidissement selon la revendication 1 dans lequel:
la condition est qu'au moins une partie de l'élément chauffant (204) ne soit pas immergée dans le liquide de refroidissement; et le module de commande du chauffage (124) est configuré pour détecter de manière sélective la présence de la condition en fonction de la température.

6. Système de chauffage du liquide de refroidissement selon la revendication 5, dans lequel le module de commande du chauffage (124) est configuré pour détecter la présence de la condition lorsque la température est supérieure à une deuxième température prédéterminée qui est supérieure à la température prédéterminée.

7. Système de chauffage du liquide de refroidissement selon la revendication 5, dans lequel le module de commande du chauffage (124) est configuré pour détecter la présence de la condition en fonction d'un taux d'augmentation de la température.

8. Système de chauffage du liquide de refroidissement selon la revendication 1 dans lequel:
la condition est un faible débit de liquide de refroidissement; et
le module de commande du chauffage (124) est configuré pour détecter de manière sélective la présence de la condition en fonction de la température.

9. Système de chauffage du liquide de refroidissement selon la revendication 1, dans lequel le module de commande du chauffage (124) est configuré pour détecter la présence de la condition en fonction d'une différence entre la température et la deuxième température.

10. Système de chauffage du liquide de refroidissement selon la revendication 1 comprenant en outre une pompe (120) configurée pour pomper le liquide de refroidissement entre le réchauffeur de liquide de refroidissement (116) et le moteur (104),
dans lequel la condition est un défaut de la pompe (120); et
le module de commande du chauffage (124) est configuré pour détecter de manière sélective la présence de la condition en fonction de la température.

11. Système de chauffage du liquide de refroidissement selon la revendication 10,
dans lequel le module de commande du chauffage (124) est configuré pour détecter la présence de la condition en se basant en outre sur la deuxième température.

12. Procédé, comprenant:
la réception d'une température provenant d'un capteur de température (128, 220, 224), le capteur de température (128, 220, 224) étant configuré pour mesurer une température du liquide de refroidissement à l'intérieur d'un boîtier (208) d'un réchauffeur de liquide de refroidissement (116),
le réchauffeur de liquide de refroidissement (116)
comprenant: le boîtier
comprenant:
une entrée (212) configurée pour recevoir le liquide de refroidissement provenant d'un moteur (104); et une sortie (216) configurée pour fournir du liquide de refroidissement au moteur (104);
un élément chauffant à résistance électrique (204) qui est disposé à l'intérieur du boîtier (208) et qui est configuré pour générer de la chaleur lorsqu'une puissance est appliquée à l'élément chauffant (204);
le contrôle de manière sélective de l'application de puissance à l'élément chauffant (204) en fonction du maintien de la température à une température prédéterminée ou supérieure;
la détection de manière sélective de la présence d'une condition en fonction de la température; et lorsque la présence de la condition est détectée, la déconnexion de l'élément chauffant (204) de l'alimentation électrique,
le procédé étant **caractérisé en ce qu'**il comprend en outre la réception d'une température provenant d'un deuxième capteur de température (128, 220, 224) configuré pour mesurer une deuxième température de liquide de refroidissement à l'intérieur du boîtier (208),
dans lequel le module de commande du chauffage (124) est configuré pour recevoir la deuxième température provenant du deuxième capteur de température (128, 220, 224),
le capteur de température (128, 220) est configuré pour mesurer la température du liquide de refroidissement au niveau de l'entrée (212) ; et
le deuxième capteur de température (128, 224) est configuré pour mesurer la deuxième température du liquide de refroidissement au niveau de la sortie (216), dans lequel l'étape de détection de manière sélective de la présence d'une condition est en outre basée sur la deuxième température.
